# EUROPEAN PATENT SPECIFICATION

(11) **EP 3 248 938 B1**
(45) Date of publication and mention of the grant of the patent: **16.01.2019**
(21) Application number: 16740223.9
(22) Date of filing: 20.01.2016
(51) Int. Cl.: C01B 32/05, F27B 14/10

(54) **PRODUCTION METHOD FOR CARBON MATERIAL USING CRUCIBLE**
HERSTELLUNGSVERFAHREN FÜR KOHLENSTOFFMATERIAL UNTER VERWENDUNG EINES TIEGELS
PROCÉDÉ DE PRODUCTION D'UN MATÉRIAU CARBONÉ À L'AIDE D'UN CREUSET

(30) Priority: 21.01.2015 JP 2015009101
(43) Date of publication of application: 29.11.2017
(73) Proprietor: Sec Carbon, Ltd., Amagasaki-shi, Hyogo 661-0976 (JP)
(72) Inventor: NAKAMURA, Junichi, Fukuchiyama-shi Kyoto 620-0853 (JP); ARAKAWA, Eigo, Fukuchiyama-shi Kyoto 620-0853 (JP)
(74) Representative: J A Kemp
(86) International application number: PCT/JP2016/051603
(87) International publication number: WO 2016/117616

(56) References cited:
- WO-A1-2011/102473
- JP-A- H10 310 774
- JP-A- S61 213 371
- JP-A- S61 213 371
- JP-A- S63 129 006
- JP-A- 2000 211 909
- JP-A- 2001 114 506
- JP-A- 2001 114 506
- JP-A- 2004 190 871
- JP-A- 2004 190 871
- JP-A- 2004 223 360

## Description

### TECHNICAL FIELD

The present invention relates to a crucible and a method of manufacturing a carbon material using such a crucible, and, more particularly, to a crucible used for heat treatment and a method of manufacturing a carbon material manufactured through heat treatment using such a crucible.

### BACKGROUND ART

Carbon materials, particularly graphite, have special properties such as high electrical conductivity, high thermal conductivity, chemical resistance and self-lubricity, and are thus widely used in various applications as material for metallurgy and for electrical and electronic products and machines. Recently, the trend has been to develop a graphite crystal through high-temperature heat treatment to improve thermal conductivity, where the resulting graphite is used as a heat sink or heat-dissipating board or as a negative-electrode material for a lithium-ion secondary battery, for example.

Graphite may be obtained through heat treatment of a material such as a resin, such as phenol or furan, or coke or meso-carbon at temperatures of 2000 to 3200 °C, for example.

JP 2002-69757 A discloses a carbon fiber and a method and apparatus for manufacturing it. Japanese Patent No. 2744617 discloses a method and apparatus for successively graphitizing a vapor-phase-growth carbon fiber.

Japanese Patent No. 3787241 discloses an apparatus for manufacturing graphite in which a plurality of cylindrical graphite pipes are connected to form a heating tube and transport trays are positioned inside this heating tube to transport raw material for graphite. In this apparatus, transport trays are used to successively move raw material for graphite through the heating tube. This arrangement allows raw material for graphite to be successively subjected to heat treatment.
JP 2001-114506 discloses a method of producing graphite powder by energizing the container in which the raw material is contained.
JP 2004-190871 discloses a method of heat treatment in which a conveying tray conveys raw material from one end of a cylindrical heating body toward the other end.
JP S61-213371 discloses a vapour-deposition crucible.

### DISCLOSURE OF THE INVENTION

In the arrangements of the above-discussed graphitization apparatus and apparatus for manufacturing graphite, impurities that have volatilized from the raw material may adhere back to the raw material.

An object of the present invention is to manufacture a carbon material with increased purity.

The method of manufacturing a carbon material disclosed herein includes the steps of: preparing a crucible including a container having a cylindrical body and a bottom closing an end of the body, and a lid having a cylindrical portion and a disc closing an end of the cylindrical portion; placing raw material in the crucible; heating a graphite tube positioned such that its axial direction is horizontal; and loading the crucible with the raw material placed therein into an interior of the graphite tube such that the body's axial direction is parallel to the axial direction of the graphite tube. A male thread is provided on an outer periphery of the body, and a female thread is provided on an inner periphery of the cylindrical portion for being to be screwed on the male thread. The lid has an outer diameter equal to that of the container, and the disc has a through-hole.

In the construction of the crucible of the above-disclosed manufacture method, a male thread is provided on the outer periphery of the body of the container, and a female thread is provided on the inner periphery of the cylindrical portion of the lid. This will prevent powder dust produced as the male and female threads slide on each other from entering the interior of the container. This will prevent foreign matter from getting mixed in the raw material placed in the container. This will allow manufacture of a carbon material with high purity.

The disc has a through-hole. With this construction, even when the inner pressure rises at a high rate, volatilized matter is discharged through the through-hole, thereby preventing the lid from breaking.

The present invention allows manufacture of a carbon material with increased purity.

### BRIEF DESCRIPTION OF THE DRAWINGS

FIG. 1 is a schematic plan view of a heat treatment apparatus.
FIG. 2 is a cross-sectional view of the apparatus taken along line II-II in FIG. 1.
FIG. 3 is a schematic perspective view of the crucible.
FIG. 4 is a cross-sectional view of the crucible taken along line IV-IV in FIG. 3.
FIG. 5 is a flow chart of an example of the method of manufacturing a carbon material.
FIG. 6 is a front view of the heat treatment apparatus as viewed in an axial direction of the heater.
FIG. 7 is a schematic cross-sectional view of a crucible of an imaginary comparative example.

### EMBODIMENTS FOR CARRYING OUT THE INVENTION

### [Embodiments]

An embodiment of the present invention will now be described in detail with reference to the drawings. In the drawings, the same or corresponding elements are labeled with the same reference characters and their description will not be repeated. For ease of explanation, the drawings to which reference will be made below show the components in a simplified or schematic manner, or do not show some of the components. The size ratios between the components shown in the drawings do not necessarily represent their actual size ratios.

### [Overall Construction]

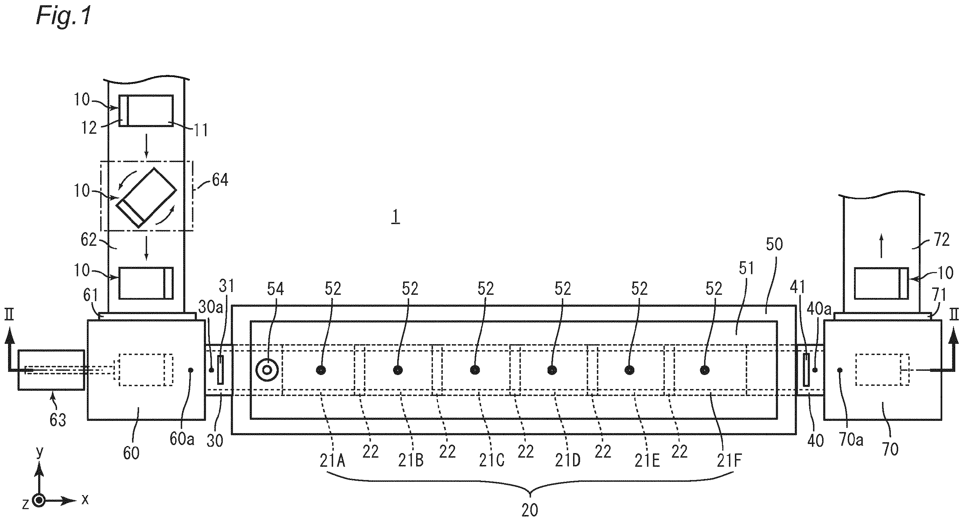

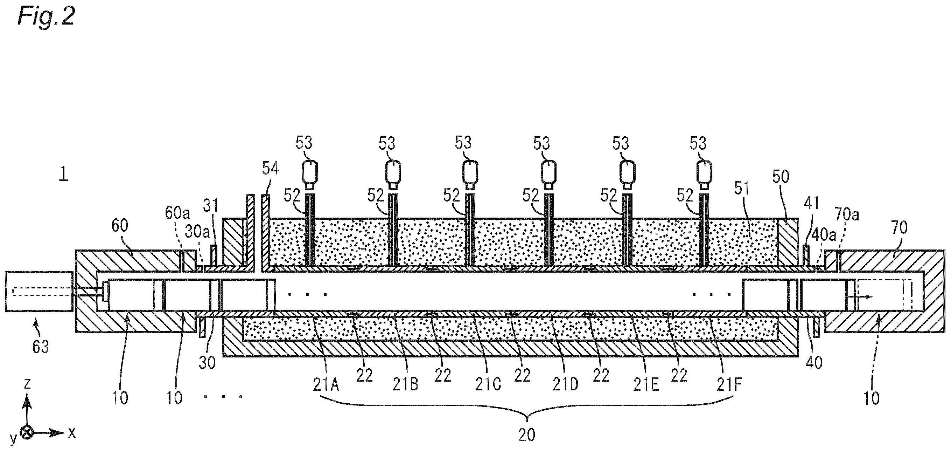

FIG. 1 is a schematic plan view of a heat treatment apparatus 1 according to one embodiment of the present invention. FIG. 2 is a cross-sectional view of the apparatus taken along line II-II in FIG. 1. The heat treatment apparatus 1 includes a heater 20, troughs 30 and 40, a furnace wall 50, and chambers 60 and 70.

The heat treatment apparatus 1 moves crucibles 10 in each of which raw material is placed through the interior of the cylindrical heater 20 (i.e. graphite tube) along its axial direction to successively perform heat treatment. The heater 20 also serves as the furnace core tube of the heat treatment apparatus 1.

The heater 20 is composed of a plurality of graphite pipes 21A, 21B, ..., and 21F. The graphite pipes 21A, 21B, ..., 21F are arranged to share the same axis, where an end side of a pipe is coupled with an end side of another pipe. A connection ring 22 made of graphite is fitted to the connection portion of adjacent ones of the graphite pipes 21A, 21B, ..., 21F to fix their radial position.

The ends of the heater 20 are connected to the troughs 30 and 40. Similar to the heater 20, the troughs 30 and 40 are made of an electrically conductive heat-resistant material, such as graphite. The troughs 30 and 40 are cylindrical in shape and have the same inner diameter as the heater 20.

The entire heater 20 and parts of the troughs 30 and 40 are surrounded by the furnace wall 50, which is made of fireproof blocks or the like. The space defined by the furnace wall 50 is filled with an insulating material 51. The insulating material 51 may be graphite powder, for example.

Electrodes 31 and 41 are provided on portions of the troughs 30 and 40, respectively, that are not covered with the furnace wall 50. The electrodes 31 and 41 are supplied with electric power by a power source, not shown. The electrodes 31 and 41 are electrically connected to the heater 20 via the troughs 30 and 40. In the heat treatment apparatus 1, the heater 20 is heated by causing electric current to flow through the heater 20.

A plurality of temperature measurement tubes 52 are provided inside the furnace wall 50 to be in contact with the periphery of the heater 20. The temperature of the heater 20 is measured by a plurality of radiation thermometer 53 (FIG. 2).

Gas inlets 30a and 40a are formed in the troughs 30 and 40, respectively. A gas discharge tube 54 is provided inside the furnace wall 50 to communicate with the interior of the trough 30. An inert gas such as nitrogen or argon is introduced into the interior of the heater 20 through the gas inlets 30a and 40a. Inert gas that has been introduced is discharged through the gas discharge tube 54 together with impurities that have been volatilized by heat treatment.

The troughs 30 and 40 are connected to the chambers 60 and 70, respectively. As shown in FIG. 1, the chamber 60 includes a shutter 61. The chamber 70 includes a shutter 71. The heat treatment apparatus 1 further includes conveyors 62 and 72, a push-in device 63, and a direction-reversing device 64. Further, gas inlets 60a and 70a are formed in the chambers 60 and 70, respectively. Inert gas is also introduced through the gas inlets 60a and 70a.

A plurality of crucibles 10 are loaded into the interior of the heater 20, where the crucibles are in contact with each other. In the heat treatment apparatus 1, a crucible 10 at the chamber 60 is pushed in by the push-in device 63. Thus, the crucibles 10 in the heater 20 move toward the chamber 70.

In the heat treatment apparatus 1, the shutter 61 and conveyor 62 are driven to transport a crucible 10 before heat treatment into the chamber 60. In the heat treatment apparatus 1, the shutter 71 and conveyor 72 are driven to transport a crucible 10 after heat treatment out of the chamber 70. The heat treatment apparatus 1 repeats these steps to successively perform heat treatment on the crucibles 10.

The direction-reversing device 64 is located on the path of transport by the conveyor 62. The direction-reversing device 64 may be a mechanical arm, for example, for grasping a crucible 10 from above the conveyor 62 and rotating it. The direction-reversing device 64 rotates the crucible 10 such that the lid faces toward the chamber 70. As the lid faces toward the chamber 70, the lid is prevented from being broken by a pressing force by the push-in device 63.

### [Construction of Crucible 10]

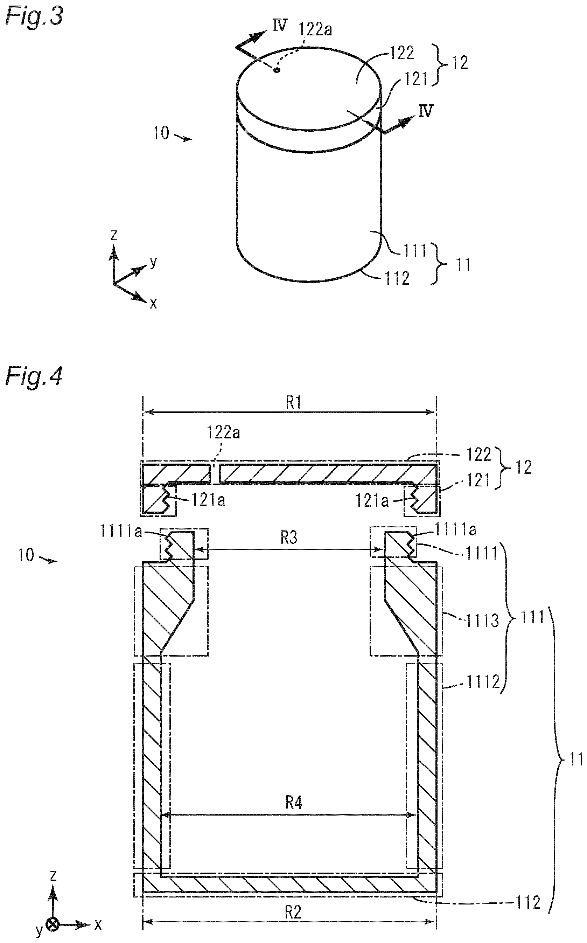

FIG. 3 is a schematic perspective view of the crucible 10. FIG. 4 is a cross-sectional view of the crucible taken along line IV-IV in FIG. 3. The crucible 10 includes a container 11 and a lid 12.

The container 11 includes a cylindrical body 111 and a bottom 112 closing an end of the body 111. As shown in FIG. 4, the body 111 includes body portions 1111 to 1113. Starting with the opening of the container 11 (i.e. side of the container opposite to the bottom 112), the body portions 1111 to 1113 are arranged in the following order: body portion 1111, body portion 1113, and body portion 1112. That is, the body portion 1112 is located between the body portion 1111 and bottom 112, and the body portion 1113 is located between the body portions 1111 and 1112.

The lid 12 includes a cylindrical portion 121 and a disc 122 closing an end of the cylindrical portion 121.

A male thread 1111a is provided on the outer periphery of the body portion 1111 of the container 11. A female thread 121a is provided on the inner periphery of the cylindrical portion 121 of the lid 12. The lid 12 may be fixed to the container 11 by making up the male and female threads 1111a and 121a.

The outer diameter R1 of the lid 12 is equal to the outer diameter R2 of the container 11. Thus, when the lid 12 has been fixed to the container 11, the crucible 10 is cylindrical in shape.

The inner diameter R4 of the body portion 1112 is larger than the inner diameter R3 of the body portion 1111. The inner diameter of the body portion 1113 gradually increases as it goes from the body portion 1111 toward the body portion 1112. In FIG. 4, the inner diameter of the body portion 1113 changes in a straight-line manner; alternatively, it may change in a curved-line manner.

The disc 122 of the lid 12 has a through-hole 122a that is offset in position from the center of the disc 122 and extends through the disc 122 in the thickness direction.

### [Method of Manufacturing Carbon Material]

An example of the method of manufacturing a carbon material manufactured through heat treatment using the crucible 10 will be described below. However, the method of manufacturing a carbon material using the crucible 10 is not limited to this example. This example describes an implementation where the carbon material to be manufactured is graphite; however, the carbon material manufactured is not limited to graphite.

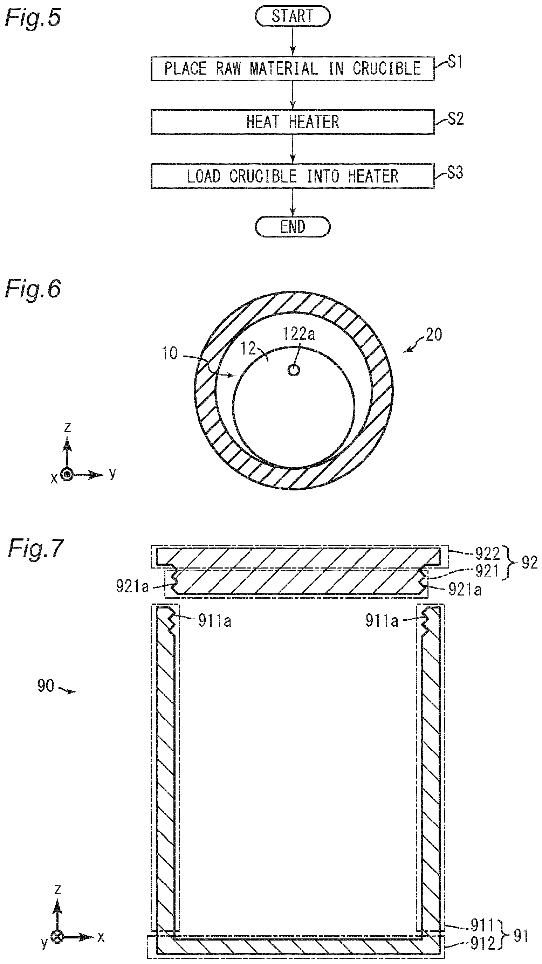

FIG. 5 is a flow chart of an example of the method of manufacturing a carbon material. This manufacture method includes the steps of placing raw material for graphite in a crucible 10 (step S1), heating the heater 20 (step S2), and loading the crucible 10 with the raw material for graphite placed therein into the heater 20 (step S3).

First, raw material for graphite is placed in a crucible 10 (step S1). Raw material for graphite may be, for example, powder of a resin, such as phenol or furan, or coke or meso-carbon. After the raw material for graphite is put in the container 11, the lid 12 is fixed to the container 11. As discussed above, the lid 12 may be fixed to the container 11 by making up the male and female threads 1111a and 121a.

Subsequently, the heater 20 is heated (step S2). As discussed above, in the heat treatment apparatus 1, the heater 20 may be heated by energizing the heater 20 through the electrodes 31 and 41 (FIG. 1). The heating temperature may be in the range of 2000 to 3200 °C, for example, and preferably in the range of 2200 to 3000 °C.

Then, the crucible 10 with the raw material for graphite placed therein is loaded into the heater 20 (step S3). Here, the crucible 10 is inserted with the axial direction of the body 111 of the container 11 (i.e. z-direction in FIG. 3) being parallel to the axial direction of the heater 20 (i.e. x-direction in FIG. 2).

As discussed above, the heat treatment apparatus 1 includes a conveyor 62, a push-in device 63 and other components. According to the present embodiment, the crucible 10 is transported by the conveyor 62 and loaded into the heater 20 at a predetermined point of time. Thus, the raw material for graphite in the crucible 10 is graphitized to produce graphite.

FIG. 6 is a front view of the heat treatment apparatus 1 as viewed in an axial direction of the heater 20 (i.e. front view as viewed from the positive x-direction in FIG. 1). As shown in FIG. 6, the crucible 10 is preferably loaded into the heater 20 such that the through-hole 122a in the lid 12 is located right up (i.e. at the uppermost position or clock position of 12 o'clock).

As discussed above, the crucible 10 is preferably loaded into the heater with the lid 12 facing toward the chamber 70. In the present embodiment, the direction-reversing device 64 (FIG. 1) rotates the crucible 10 such that the lid 12 faces toward the chamber 70. In this arrangement, the lid 12 of a crucible 10 located upstream of the direction-reversing device 64 along the direction of transport of the conveyor 62 faces to the left with respect to the conveyor 62 in the drawing. Thus, for example, even if an operator can only be positioned to the left of the conveyor 62 in the drawing, he/she can do his/her work while checking the position of the through-hole 122a.

This example describes an implementation where the heater 20 is heated before the crucible 10 is loaded into the heater 20. Alternatively, the crucible 10 may be loaded into the heater 20 before the heater 20 is heated.

### [Effects of Present Embodiment]

The construction of the heat treatment apparatus 1, the construction of the crucible 10, and the method of manufacturing graphite using them have been described. According to the present embodiment, raw material for graphite is placed in the crucible 10 and is subjected to heat treatment. The opening of the container 11 of the crucible 10 is closed by the lid 12. As heat treatment is being done, impurities volatilize from the raw material for graphite. As the inner pressure of the crucible 10 rises, volatilized impurities are discharged through the gap between the container 11 and lid 12 and through the through-hole 20a. On the other hand, impurities that have been discharged do not re-enter the interior of the crucible 10. Thus, impurities that have volatilized from the raw material for graphite do not adhere back to the raw material for graphite. This will provide graphite with high purity.

According to the present embodiment, a male thread 1111a is provided on the outer periphery of the body portion 1111 of the container 11, while a female thread 121a is provided on the inner periphery of the cylindrical portion 121 of the lid 12. The effects of this construction will be described in comparison with an imaginary comparative example.

FIG. 7 is a schematic cross-sectional view of a crucible 90 of an imaginary comparative example. The crucible 90 includes a container 91 and a lid 92. The container 91 includes a cylindrical body 911 and a bottom 912 closing one end of the body 911. The lid 92 includes a cylindrical portion 921 and a disc 922 provided on one end of the cylindrical portion 921. In the crucible 90, a female thread 911a is provided on the inner periphery of the body 911 of the container 91, and a male thread 921a is provided on the outer periphery of the cylindrical portion 921 of the lid 92.

In the construction of the crucible 90, during make-up of the female and male threads 911a and 921a, powder dust produced as the female and male threads 911a and 921a slide on each other may enter the interior of the container 91.

In contrast, in the construction of the crucible 10 of the present embodiment, powder dust produced as the male and female threads 1111a and 121a slide on each other does not enter the interior of the container 11. This will prevent foreign matter from getting mixed in the raw material for graphite and the resulting graphite.

According to the present embodiment, the outer diameter R1 of the lid 12 is equal to the outer diameter R2 of the container 11. In this construction, the crucible 10 is cylindrical in shape when the lid 12 has been fixed to the container 11. According to the present embodiment, the crucible 10 is positioned such that the axial direction of the body 111 is parallel to the axial direction of the heater 20. At this time, the crucible 10 can be stably positioned in the heater 20 since the crucible 10 is cylindrical in shape. Further, the crucible 10 can be smoothly moved. It should be noted that the outer diameter R1 of the lid 12 and the outer diameter R2 of the container 11 need not be exactly equal to each other, and are only required to be substantially equal to each other.

As shown in FIG. 4, as the male thread 1111a is provided on the container 11 and the female thread 121a is provided on the lid 12 and the outer diameters R1 and R2 are equal to each other, the outer diameter of the body portion 1111 is smaller than the outer diameter R1 of the lid 12. According to the present embodiment, the inner diameter R4 of the body portion 1112 is larger than the inner diameter R3 of the body portion 1111. In other words, the container 11 has a larger inner diameter toward the bottom 112. In this construction, the capacity of the container 11 can be large even when the outer diameter of the body portion 1111 is reduced.

According to the present embodiment, the inner diameter of the body portion 1113 gradually increases as it goes from the body portion 1111 toward the body portion 1112. When the resulting graphite is to be removed from the container 11, this construction prevents the graphite from getting caught by a step between the body portions 1111 and 1112. This will allow the graphite to be removed smoothly.

As discussed above, when the inner pressure of the crucible 10 rises, volatilized matter is discharged through the gap between the container 11 and lid 12. However, for example, if the raw material for graphite contains a large amount of volatile matter or a large amount of volatilized matter is produced in a particular temperature range, the rate of discharge may be not sufficient, which could cause the lid 12 to break. According to the present embodiment, the disc 122 of the lid 12 has a through-hole 122a. In this construction, even when the inner pressure rises at a high rate, the lid 12 or other components are prevented from breaking since volatilized matter is discharged through the through-hole 122a.

The through-hole 122a is offset in position from the center of the disc 122. According to the present embodiment, the crucible 10 is loaded into the heater 20 such that the through-hole 122a is located right up. This arrangement will prevent raw material for graphite from bursting out when volatilized matter is discharged through the through-hole 122a. It should be noted that the through-hole 122a need not be located exactly right up, and is only required to be substantially right up upon loading.

### [Other Embodiments]

Although an embodiment of the present invention has be described, the present invention is not limited to the above-described embodiment, and various modifications are possible within the scope of the invention.

The above-described embodiment describes an implementation where the heater 20 also serves as the furnace core tube. Alternatively, the heat treatment apparatus 1 may include a heater for heating that is separate from the furnace core tube. Further, although the above-described embodiment describes an implementation where the heater 20 is heated through energization, the heater 20 may be heated through induction.

The above-described embodiment describes an implementation where the heat treatment apparatus 1 includes chambers 60 and 70. Alternatively, the heat treatment apparatus 1 may include only one or none of the chambers 60 and 70 and a shutter may be provided on the entrance of the trough 30 or the exit of the trough 40. Further, the conveyors 62 and 72 may be absent. Or, the conveyors 62 and 72 may be replaced by slopes or the likes.

As illustrated by the above-described embodiment, the crucible 10 may be suitably used in a heat treatment apparatus 1 including a heater 20 positioned such that its axial direction is horizontal. However, the heat treatment apparatus for treating the crucible 10 is not limited to this construction, and various heat treatment apparatus may be used.

## Claims

1. A method of manufacturing a carbon material, comprising the steps of:
preparing a crucible (10) including a container (11) having a cylindrical body (111) and a bottom (112) closing an end of the body (111), and a lid (12) having a cylindrical portion (121) and a disc (122) closing an end of the cylindrical portion (121);
placing raw material in the crucible (10);
heating a graphite tube (21A-F) positioned such that its axial direction is horizontal; and
loading the crucible (10) with the raw material placed therein into an interior of the graphite tube (21A-F) such that the body's axial direction is parallel to the axial direction of the graphite tube (21A-F),
wherein:
a male thread (1111a) is provided on an outer periphery of the body (111),
a female thread (121a) is provided on an inner periphery of the cylindrical portion (121) for being screwed on the male thread (1111a);
the lid (12) has an outer diameter (R1) equal to that of the container (11); and
the disc (122) has a through-hole (122a).

2. The method of manufacturing a carbon material according to claim 1, wherein:
the body (111) includes a first body portion (1111) having the male thread (1111a) provided on its outer diameter and a second body portion (1112) located between the first body portion (1111) and the bottom (112); and
the second body portion (1112) has an inner diameter (R4) that is larger than that of the first body portion (1111).

3. The method of manufacturing a carbon material according to claim 2, wherein:
the body (111) further includes a third body portion (1113) located between the first body portion (1111) and the second body portion (1112); and
the third body portion (1113) has an inner diameter increasing gradually from the first body portion (1111) toward the second body portion (1112).

4. The method of manufacturing a carbon material according to any one of claims 1 to 3, wherein:
the through-hole (122a) is offset in position from the center of the disc (122); and
the crucible (10) is positioned such that the through-hole (122a) is located right up.

## Patentansprüche

1. Verfahren des Herstellens eines Kohlenstoffmaterials, umfassend die folgenden Schritte:
Herstellen eines Tiegels (10), umfassend einen Behälter (11), der einen zylindrischen Körper (111) und einen Boden (112) aufweist, der ein Ende des Körpers (111) abschließt, und einen Deckel (12), der einen zylindrischen Abschnitt (121) und eine Scheibe (122) aufweist, die ein Ende des zylindrischen Abschnitts (121) abschließt;
Platzieren von Rohstoffen in dem Tiegel (10);
Erwärmen eines Graphitrohrs (21A-F), das so positioniert ist, dass seine axiale Richtung horizontal ist; und
Beladen des Tiegels (10) mit den Rohstoffen, die darin in einem Inneren des Graphitrohrs (21 A-F) platziert sind, sodass die axiale Richtung des Körpers parallel zu der axialen Richtung des Graphitrohrs (21 A-F) ist,
wobei:
ein Außengewinde (1111a) an einer äußeren Peripherie des Körpers (111) bereitgestellt ist,
ein Innengewinde (121a) an einer inneren Peripherie des zylindrischen Abschnitts (121) bereitgestellt ist, um auf das Außengewinde (1111a) aufgeschraubt zu werden;
der Deckel (12) einen Außendurchmesser (R1) aufweist, der dem des Behälters (11) entspricht; und
die Scheibe (122) ein Durchgangsloch (122a) aufweist.

2. Verfahren des Herstellens eines Kohlenstoffmaterials nach Anspruch 1, wobei:
der Körper (111) einen ersten Körperabschnitt (1111), der das Außengewinde (1111a) aufweist, das an seinem Außendurchmesser bereitgestellt ist, und einen zweiten Körperabschnitt (1112), der sich zwischen dem ersten Körperabschnitt (1111) und dem Boden (112) befindet, beinhaltet; und
der zweite Körperabschnitt (1112) einen Innendurchmesser (R4) aufweist, der größer ist als der des ersten Körperabschnitts (1111).

3. Verfahren des Herstellens eines Kohlenstoffmaterials nach Anspruch 2, wobei:
der Körper (111) ferner einen dritten Körperabschnitt (1113) beinhaltet, der sich zwischen dem ersten Körperabschnitt (1111) und dem zweiten Körperabschnitt (1112) befindet; und
der dritte Körperabschnitt (1113) einen Innendurchmesser aufweist, der allmählich von dem ersten Körperabschnitt (1111) zu dem zweiten Körperabschnitt (1112) zunimmt.

4. Verfahren des Herstellens eines Kohlenstoffmaterials nach einem der Ansprüche 1 bis 3, wobei:
das Durchgangsloch (122a) positionsmäßig von der Mitte der Scheibe (122) versetzt ist; und
der Tiegel (10) so positioniert ist, dass das Durchgangsloch (122a) ganz oben angeordnet ist.

## Revendications

1. Procédé de fabrication d'un matériau carboné, comprenant les étapes de :
préparation d'un creuset (10) comprenant un récipient (11) présentant un corps cylindrique (111) et une partie inférieure (112) fermant une extrémité du corps (111) et un couvercle (12) présentant une partie cylindrique (121) et un disque (122) fermant une extrémité de la partie cylindrique (121) ;
placement de matière première dans le creuset (10) ;
chauffage d'un tube de graphite (21A-F) positionné de manière que sa direction axiale est horizontale ; et
chargement du creuset (10) avec une matière première placée dedans à l'intérieur du tube de graphite (21A-F) de manière que la direction axiale du corps est parallèle à la direction axiale du tube de graphite (21A-F),
dans lequel :
un filetage mâle (1111a) est disposé sur une périphérie externe du corps (111),
un filetage femelle (121a) est disposé sur une périphérie interne de la partie cylindrique (121) en vue d'être vissé sur le filetage mâle (1111a) ;
le couvercle (12) présente un diamètre externe (R1) égal à celui du récipient (11) ; et
le disque (122) présente un trou traversant (122a).

2. Procédé de fabrication d'un matériau carboné selon la revendication 1, dans lequel :
le corps (111) comprend une première partie de corps (1111) comportant le filetage mâle (1111a) disposé sur son diamètre externe et une deuxième partie de corps (1112) située entre la première partie de corps (1111) et la partie inférieure (112) ; et
la deuxième partie de corps (1112) présente un diamètre interne (R4) qui est plus grand que celui de la première partie de corps (1111).

3. Procédé de fabrication d'un matériau carboné selon la revendication 2, dans lequel :
le corps (111) comprend en outre une troisième partie de corps (1113) située entre la première partie de corps (1111) et la deuxième partie de corps (1112) ; et
la troisième partie de corps (1113) présente un diamètre interne augmentant progressivement depuis la première partie de corps (1111) vers la deuxième partie de corps (1112).

4. Procédé de fabrication d'un matériau carboné selon l'une quelconque des revendications 1 à 3, dans lequel :
le trou traversant (122a) est positionné de manière décalée depuis le centre du disque (122) ; et
le creuset (10) est positionné de manière que le trou traversant (122a) est situé tout en haut.
